# EUROPÄISCHE PATENTSCHRIFT

(11) **EP 4 090 160 B1**
(45) Veröffentlichungstag und Bekanntmachung des Hinweises auf die Patenterteilung: **10.01.2024**
(21) Anmeldenummer: 20807805.5
(22) Anmeldetag: 23.11.2020
(51) Int. Cl.: A21C 15/02, A23G 9/50

(54) **VORRICHTUNG ZUR HERSTELLUNG EINES WAFFELBECHERS**
DEVICE FOR PRODUCING A WAFER CUP
DISPOSITIF DE FABRICATION D'UN GOBELET EN GAUFRETTE

(30) Priorität: 15.01.2020 EP 20000017
(43) Veröffentlichungstag der Anmeldung: 23.11.2022
(73) Patentinhaber: Walterwerk Kiel GmbH & Co. KG, 24106 Kiel (DE)
(72) Erfinder: KEMPASS, Dieter, 24109 Kiel (DE)
(74) Vertreter: Lobemeier, Martin Landolf
(86) Internationale Anmeldenummer: PCT/EP2020/083037
(87) Internationale Veröffentlichungsnummer: WO 2021/144054

(56) Entgegenhaltungen:
- WO-A1-95/08268
- FR-A1- 2 577 760
- FR-A1- 2 723 516

## Beschreibung

Die Erfindung betrifft eine Vorrichtung zur Herstellung eines Waffelbechers, die einen Formkern und eine Matrize aufweist.

Häufig werden aus Teig gefertigte Waffeln nicht nur als eigenständige Snacks, sondern in Form von Waffeltüten und Waffelbechern zur Aufnahme von Lebensmitteln, beispielsweise als Eiswaffel oder auch als essbares Geschirr, verwendet. Während Waffeltüten relativ einfach durch Aufwickeln flächig gebackener Waffelblätter mit hoher Qualität hergestellt werden können, führt die Herstellung von Waffelbechern - abhängig vom verwendeten Verfahren - zu qualitativ recht unterschiedlichen Ergebnissen.

So wird etwa das Waffelblatt bei der Herstellung von Waffelbechern durch Tiefziehen im Bereich des Bodens stark gedehnt, sodass in dessen Folge Löcher entstehen können, aus denen beim Beschichten bzw. Befüllen des Waffelbechers das verwendete Füllmaterial austreten kann. Dieser Effekt wird durch eine unregelmäßige beziehungsweise unkontrollierte Faltenbildung und dem damit erhöhten Wiederstand während des Tiefziehens sogar noch verstärkt.

Ein alternatives Verfahren ist hingegen mit der aus der WO 95/08268 A1 bekannten Vorrichtung ermöglicht, bei dem mittels eines oberen Formwerkzeugs und eines unteren Formwerkzeugs Waffelbecher mit einem gewellten Rand hergestellt werden können. Dieses erfolgt durch Umformen eines flächigen Waffelblatts, das durch am oberen Formwerkzeug angeordnete verschwenkbare Formelemente an am unteren Formwerkzeug angeordnete ebenfalls verschwenkbare Formelemente angelegt wird. Die Ausbildung des Waffelblatts als Waffelbecher erfolgt also zwischen dem als Matrize wirkenden oberen Formwerkzeug und dem als Formkern wirkenden unteren Formwerkzeug der bekannten Vorrichtung. Eine ähnliche Vorrichtung ist auch aus der FR 2 577 760 A1 bekannt.

Wenngleich die beim Tiefziehen bestehenden Nachteile mit der bekannten Vorrichtung grundsätzlich vermieden werden können, ist der hierfür notwendige apparative Aufbau erheblich. Insbesondere ist es notwendig, die Bewegung der unabhängig voneinander agierenden Formwerkzeuge miteinander zu synchronisieren, wozu eine Mehrzahl von Schrittmotoren mit einer Mehrzahl von Riemenantrieben verwendet wird. Die aus der WO 95/08268 A1 bekannte Vorrichtung weist daher einen nachteilig aufwändigen und aufgrund der Vielzahl von sich gegeneinander bewegenden Elementen auch störanfälligen Aufbau auf.

Schließlich ist aus der FR 2 577 760 A1 eine Vorrichtung mit den Merkmalen des Oberbegriffs von Anspruch 1 bekannt, mit der zwar Waffelbecher mit einem gewellten Rand hergestellt werden können - allerdings besteht bei diesem vorbekannten Aufbau ebenfalls die Gefahr einer Loch- oder Faltenbildung im Waffelblatt.

Aufgabe der Erfindung ist es daher, die eine einfach aufgebaute und wenig störanfällige Vorrichtung zur Herstellung eines Waffelbechers zu schaffen, die eine Loch- und Faltenbildung im Waffelblatt vermeidet.

Diese Aufgabe wird erfindungsgemäß durch die Vorrichtung mit den Merkmalen von Anspruch 1 gelöst. Die Unteransprüche geben vorteilhafte Ausgestaltungen der Erfindung wieder.

Der Grundgedanke der vorliegenden Erfindung besteht darin, eine einfach aufgebaute Vorrichtung zur Herstellung eines Waffelbechers zu schaffen, mittels der ein Waffelblatt durch Anklappen verschwenkbarer, die Matrize bildender Wandsegmente an einen Formkern angelegt werden kann, ohne dass eine Loch- oder Faltenbildung im Waffelblatt erfolgt. Dabei wird der Formkern insbesondere als Antrieb für die Bewegung der Wandsegmente verwendet, sodass ein aufwändiger und damit störanfälliger apparativer Aufbau entfällt.

Erfindungsgemäß wird zur Herstellung eines Waffelbechers eine Vorrichtung mit einem Formkern und einer Matrize vorgeschlagen, bei der die Matrize einen Boden und eine Mehrzahl von gelenkig mit dem Boden verbundenen Wandsegmenten aufweist, und Mittel zum Verschwenken der Wandsegmente von einer ersten Position, in der der Boden eine Auflage zur Aufnahme eines sich über den Boden hinaus erstreckenden Waffelblatts ausbildet, in eine zweite Position, in der die Wandsegmente unter Anlegen der sich über den Bereich des Bodens hinaus erstreckenden Abschnitte des Waffelblatts an den Formkern eine den Boden umschließende, sich im Wesentlichen senkrecht vom Boden erstreckende Wandung ausbilden, vorgesehen sind, wobei der Formkern und der Boden gegen die Mittel verschieblich gelagert sind.

Der für die Ausführung der Schwenkbewegung notwendige Antrieb der Vorrichtung insgesamt wird allein durch eine lineare Abwärtsbewegung des Formkerns bewirkt. Dabei wird das dem Boden aufliegende Waffelblatt zwischen dem Boden und dem in Richtung des Bodens abgesenkten Formkern eingeklemmt und mit seinen sich über den Boden hinaus erstreckenden Abschnitten bei weiter vom Formkern bewirkter gemeinsamer Abwärtsbewegung von Formkern und Boden durch eine aufwärts gerichtete Schwenkbewegung der Wandsegmente an den Formkern angepresst, sodass ein (bevorzugt runder und glattrandiger) Waffelbecher entsteht.

Die Halterung weist erfindungsgemäß zwei übereinander angeordnete Ebenen auf, wobei eine erste Gruppe von Wandsegmenten mittels einer ersten Gruppe von Armen mit der ersten Ebene der Halterung und eine zweite Gruppe von Wandsegmenten mittels einer zweiten Gruppe von Armen mit der zweiten Ebene der Halterung verbunden sind. Dabei sind die Wandsegmente der ersten Gruppe von Wandsegmenten und die Wandsegmente der zweiten Gruppe von Wandsegmenten am Umfang des Bodens alternierend angeordnet. Aufgrund dieser Ausgestaltung erfolgt das Anlegen der Wandsegmente vorteilhaft in zwei zeitlich voneinander getrennten Abschnitten, sodass eine zufällig auftretende Faltenbildung im Wandungsbereich des Waffelbechers vermieden werden kann.

Der Formkern ist insbesondere als Kegelstumpf ausgebildet, wobei die Deckfläche des Kegelstumpfs dem Boden zugewandt ist. In diesem Fall sind die Wandsegmente vom Boden ausgehend schräg nach Außen gestellt und bilden gemeinsam mit dem Boden die Negativform zum als Kegelstumpf ausgebildeten Formkern.

Der Boden ist bevorzugt an den Mitteln, nämlich an der Halterung gelagert.

Eine besonders einfache und nützliche Ausgestaltung der Erfindung wird dadurch erreicht, dass der Formkern gegen den Boden verschieblich gelagert und eine Verschiebung des Bodens gegen die Mittel bewirkend eingerichtet ist. Besonders bevorzugt kann der Boden dabei gegen die Kraft einer Feder gelagert sein, sodass die Vorrichtung aus der zweiten Position bei Anheben des Formkerns automatisch in die erste Position zurückkehrt und den in der zweiten Position gebildeten Waffelbecher freigeben kann.

Die Wandsegmente sind nach einer weiteren bevorzugten Ausgestaltung als eine eine erste Form ausbildende erste Gruppe von Wandsegmenten und als eine eine zweite Form ausbildende zweite Gruppe von Wandsegmenten ausgebildet. Besonders bevorzugt weist die dem Formkern zugewandte Mantelinnenfläche der ersten Gruppe von Wandsegmenten eine geringere Fläche auf als die dem Formkern zugewandte Mantelinnenfläche der zweiten Gruppe von Wandsegmenten. Dabei weist die eine Gruppe von Wandsegmenten höchst bevorzugt eine Führung für die andere Gruppe von Wandsegmenten auf. Insbesondere sind die Wandsegmente der ersten Gruppe von Wandsegmenten und die Wandsegmente der zweiten Gruppe von Wandsegmenten hierfür am Umfang des Bodens alternierend angeordnet.

Diese Ausgestaltung hat sich als sehr vorteilhaft erwiesen: das Waffelblatt wird also in einem ersten Schritt mittels der Wandsegmente mit kleinerer Mantelinnenfläche am Formkern vorfixiert, wobei die endgültige Ausbildung der Waffelbecherwandung in einem zweiten Schritt durch Verschwenken der Wandsegmente mit größerer Mantelinnenfläche erfolgt.

Schließlich kann auch die Mantelfläche des Formkerns oder insbesondere die Mantelinnenfläche wenigstens eines Wandsegments eine Prägung, beispielsweise in Form eines Logos oder eines Produkt- oder Firmennamens aufweisen. Durch diese Ausgestaltung ist es möglich, die Außenseite des Waffelbechers mit einer reliefartigen Verzierung zu versehen, die auch als Bild und/oder Schrift ausgebildet sein kann.

Die Erfindung wird im Folgenden anhand von in den beigefügten Zeichnungen dargestellten, besonders bevorzugt ausgestalteten Ausführungsbeispielen näher erläutert. Es zeigen:
- Fig. 1: eine geschnittene Ansicht eines ersten bevorzugten Ausführungsbeispiels nach der Erfindung;
- Fig. 2: eine perspektivische Ansicht des ersten bevorzugten Ausführungsbeispiels in einer vom Formkern eingenommenen ersten Position;
- Fig. 3: eine perspektivische Ansicht des ersten bevorzugten Ausführungsbeispiels in einer vom Formkern eingenommenen zweiten Position;
- Fig. 4: eine perspektivische Ansicht des ersten bevorzugten Ausführungsbeispiels in einer vom Formkern eingenommenen dritten Position;
- Fig. 5: eine geschnittene Ansicht des ersten bevorzugten Ausführungsbeispiels in der vom Formkern eingenommenen ersten Position (links) und dritten Position (rechts);
- Fig. 6: eine geschnittene Ansicht des um dessen Längsachse um 45° gedrehten ersten bevorzugten Ausführungsbeispiels in der vom Formkern eingenommenen zweiten Position (links) und dritten Position (rechts);
- Fig. 7: eine geschnittene Ansicht eines zweiten bevorzugten Ausführungsbeispiels nach der Erfindung;
- Fig. 8: eine perspektivische Ansicht des zweiten bevorzugten Ausführungsbeispiels in einer vom Formkern eingenommenen ersten Position;
- Fig. 9: eine perspektivische Ansicht des zweiten bevorzugten Ausführungsbeispiels in einer vom Formkern eingenommenen zweiten Position; und
- Fig. 10: eine perspektivische Ansicht des zweiten bevorzugten Ausführungsbeispiels in einer vom Formkern eingenommenen dritten Position.

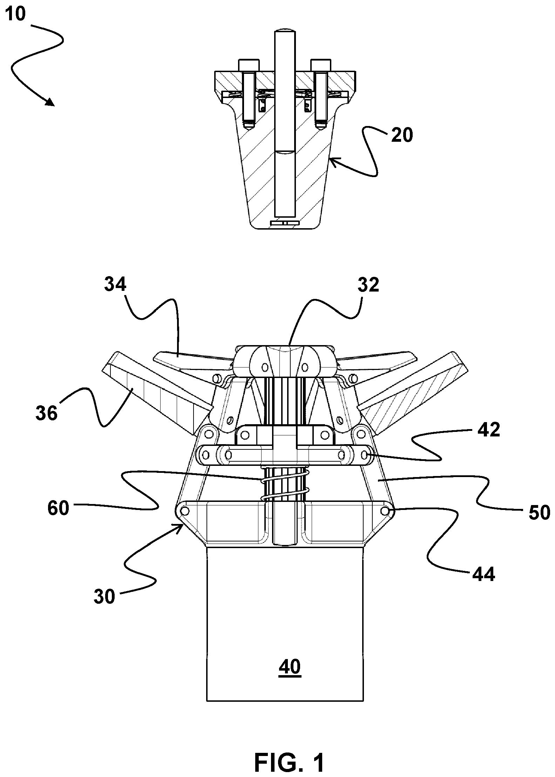

Fig. 1 zeigt eine geschnittene Ansicht eines ersten bevorzugten Ausführungsbeispiels nach der Erfindung. Insbesondere zeigt Fig. 1 eine Vorrichtung 10 zur Herstellung eines Waffelbechers, mit einem als Kegelstumpf ausgebildeten Formkern 20 und einer Matrize 30. Die Matrize 30 weist einen Boden 32 und eine Mehrzahl von gelenkig mit dem Boden 32 verbundenen Wandsegmenten 34, 36 auf. In der dargestellten ersten Position bildet der Boden 32 eine Auflage zur Aufnahme eines sich über den Boden 32 hinaus erstreckenden Waffelblatts aus, wobei die Wandsegmente 34, 36 vermittelt durch die Bewegung des Formkerns 20 und durch die Mittel 40, 42, 44, 50 zum Verschwenken der Wandsegmente 34, 36 in eine zweite Position überführt werden können, in der die Wandsegmente 34, 36 die sich über den Bereich des Bodens 32 hinaus erstreckenden Abschnitte des Waffelblatts an den Formkern 20 anlegen und aus dem Waffelblatt einen Waffelbecher formen. Dabei bilden die Wandsegmente 34, 36 eine den Boden 32 umschließende, sich im Wesentlichen senkrecht vom Boden 32 erstreckende Wandung aus.

Die Mittel 40, 42, 44, 50 zum Verschwenken der Wandsegmente 34, 36 bestehen im gezeigten Beispiel aus einer Halterung 40 und einer Mehrzahl von jeweils mit ihrem einen Ende gelenkig mit der Halterung 40 verbundenen Armen 50, die jeweils mit ihrem anderen Ende mit je einem Wandsegment 34, 36 gelenkig verbunden sind. Der Formkern 20 und der Boden 32 sind dabei gegen die Mittel 40, 42, 44, 50 verschieblich gelagert, wobei der Formkern 20 in Richtung des Bodens 32 der Matrize 30 geführt wird und den Boden 32 unter Ausführung der Schwenkbewegung der Wandsegmente 34, 36 in Richtung der Halterung 40 verschiebt. Im vorliegenden Fall ist der Boden 32 an der Halterung 40 verschieblich und gegen die Kraft einer Feder 60 gelagert.

Die Halterung 40 weist zwei übereinander angeordnete Ebenen 42, 44 auf, wobei eine erste Gruppe von Wandsegmenten 34 mittels einer ersten Gruppe von Armen 50 mit der ersten Ebene 42 der Halterung 40 und eine zweite Gruppe von Wandsegmenten 36 mittels einer zweiten Gruppe von Armen 50 mit der zweiten Ebene 44 der Halterung 40 verbunden sind. Die Arme 50 sind insbesondere gleich lang ausgebildet, sodass eine besonders einfache Fertigung der Vorrichtung 10 erreicht ist.

Weiter ist zu erkennen, dass die Wandsegmente 34, 36 als eine eine erste Form ausbildende erste Gruppe von Wandsegmenten 34 und als eine eine zweite Form ausbildende zweite Gruppe von Wandsegmenten 36 ausgebildet sind. Dabei weist die dem Formkern 20 zugewandte Mantelinnenfläche der ersten Gruppe von Wandsegmenten 34 eine geringere Fläche auf als die dem Formkern 20 zugewandte Mantelinnenfläche der zweiten Gruppe von Wandsegmenten 36.

Insbesondere sind die eine dem Formkern 20 zugewandte geringere Mantelinnenfläche aufweisenden Wandsegmenten 34 mittels der Arme 50 mit der ersten Ebene 42 der Halterung 40 verbunden, wobei die eine dem Formkern 20 zugewandte größere Mantelinnenfläche aufweisenden Wandsegmenten 36 mittels der Arme 50 mit der zweiten Ebene 44 der Halterung 40 verbunden sind. Dabei sind die Wandsegmente 34 der ersten Gruppe von Wandsegmenten 34 und die Wandsegmente 36 der zweiten Gruppe von Wandsegmenten 36 am Umfang des Bodens 32 alternierend angeordnet.

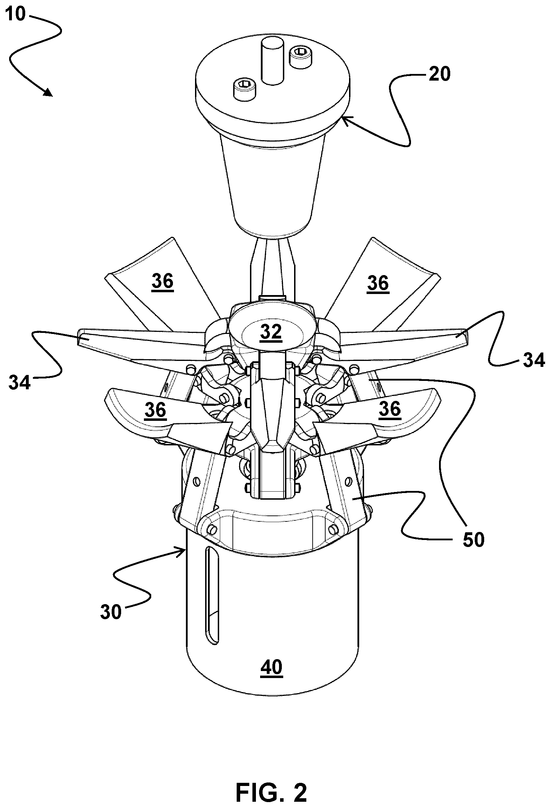

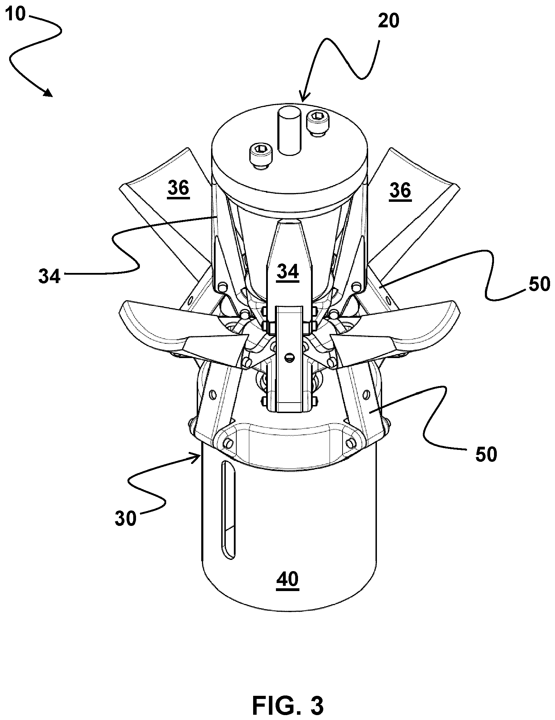

Aufgrund dieses Aufbaus werden - ausgehend von der auch in Fig. 2 in perspektivischer Ansicht gezeigten ersten Position - die geringere Mantelinnfläche aufweisenden Wandsegmente 34 bei Einwirken des Formkerns 20 auf den Boden 32 und Verschieben des Bodens 32 in Richtung der Halterung 40 - wie in Fig. 3 dargestellt - zuerst an den Formkern 20 angeklappt, sodass das (nicht dargestellte) Waffelblatt zwischen Formkern 20 und Boden 32 der Matrize 30 eingeklemmt und in den über diesen Bereich hinausgehenden Bereichen der kleineren Wandsegmente 34 seitlich angehoben wird.

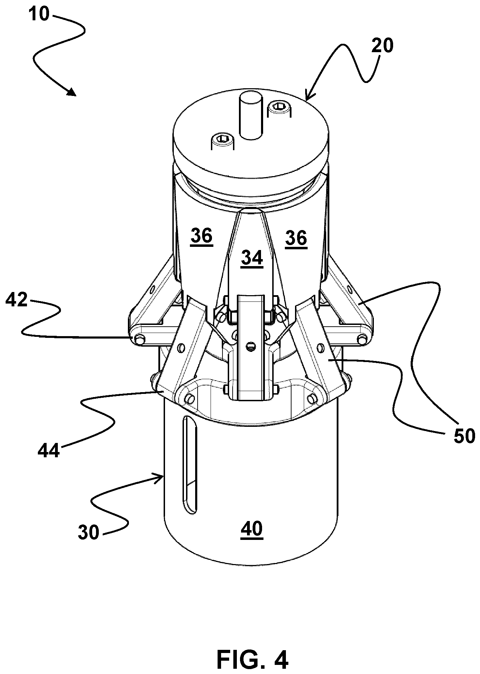

Die zwischen den Wandsegmenten 34 mit kleinerer Mantelinnfläche angeordneten Wandsegmente 36 mit größerer Mantelinnenfläche werden bei weiterer gemeinsamer Abwärtsbewegung von Formkern 20 und Boden 32 ebenfalls an den Formkern 20 anliegend verschwenkt, sodass die in Fig. 4 dargestellte dritte Position erreicht wird, in der die Wandsegmente 34, 36 eine den Boden 32 und den Formkern seitlich umschließende Wandung ausbilden. Das zwischen dem Formkern 20 und der von den Wandsegmenten 34, 36 gebildeten Matrize 30 eingeschlossene Waffelblatt nimmt somit die Form eines Waffelbechers an, ohne dass es eine das Waffelblatt beschädigende Belastung auftritt.

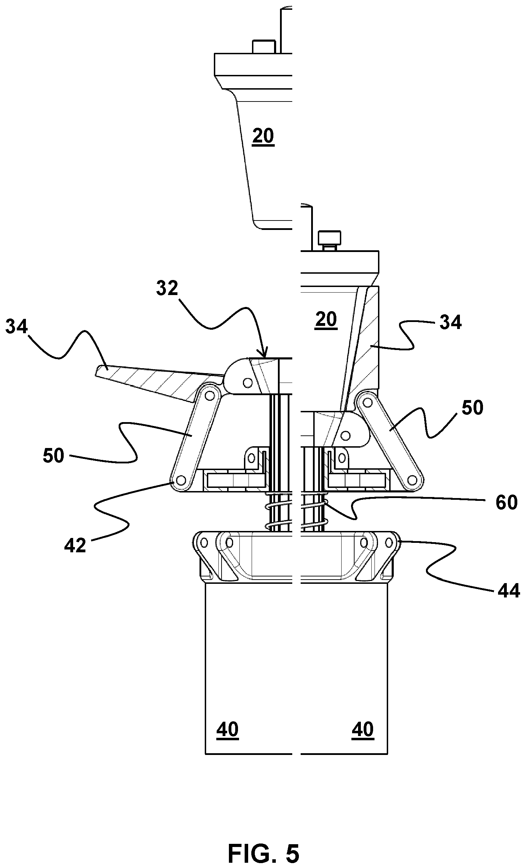

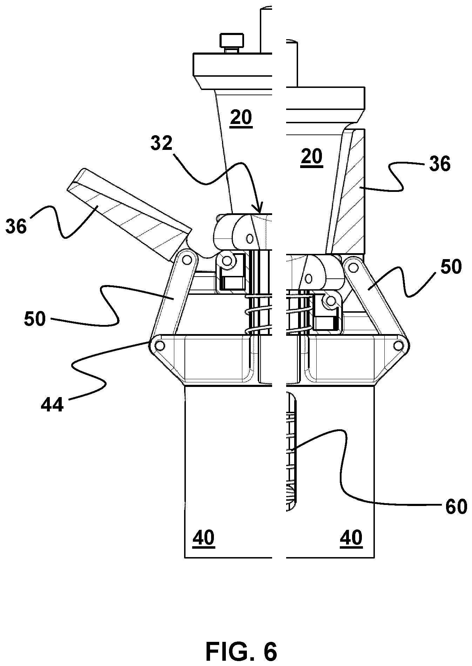

Fig. 5 und Fig. 6 zeigen noch einmal geschnittene Teilansichten des ersten Ausführungsbeispiels in der ersten Position und in der zweiten Position jeweils für die erste Gruppe von Wandsegmenten 34 und die zweite Gruppe von Wandsegmenten 36. Es ist deutlich zu erkennen, dass die durch den Formkern 20 vermittelte Abwärtsbewegung des Bodens 32 der Matrize 30 gegen die Halterung 40, an der der Boden 32 gegen die Kraft der Feder 60 verschieblich gelagert ist, zu einer aufwärtsgerichteten Schwenkbewegung der Wandsegmente 34, 36 führt, die sich in der zweiten Position unter Ausbildung des Waffelblatts als Waffelbecher an den Formkern 20 anlehnen.

Zum Entnehmen des Waffelbechers aus der Vorrichtung 10 wird der Formkern 20 angehoben, wobei sich die gelenkig am Boden 32 angeschlagenen Wandsegmente 34, 36 automatisch in ihre Ausgangsposition zurückbewegen und den auf dem Boden 32 der Matrize 30 aufliegenden Waffelbecher freigeben.

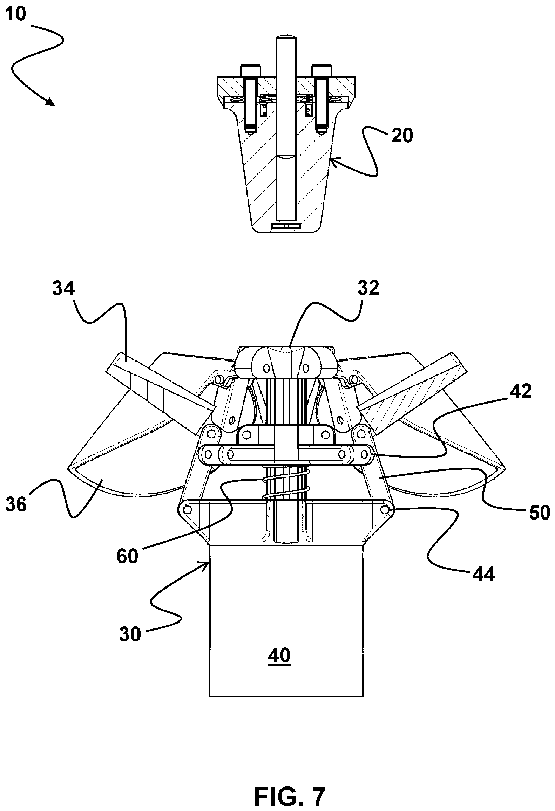

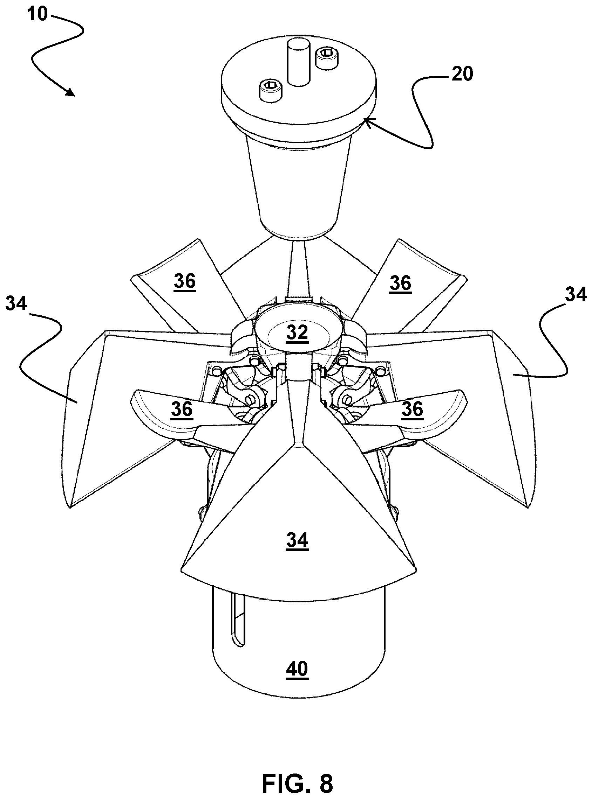

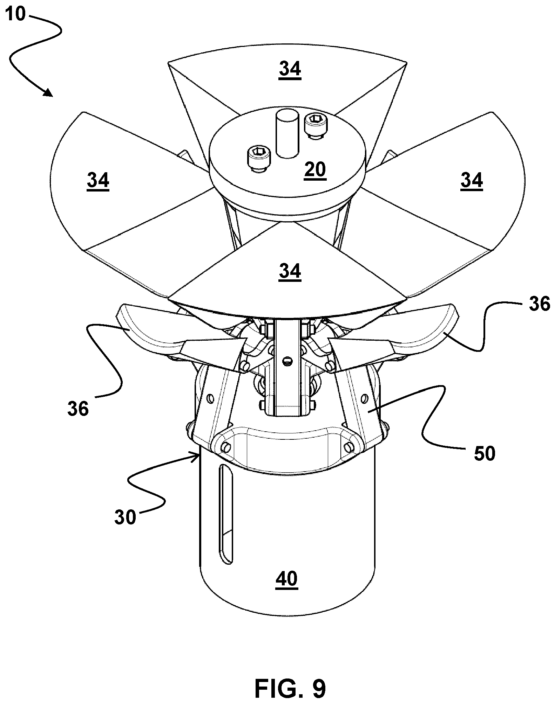

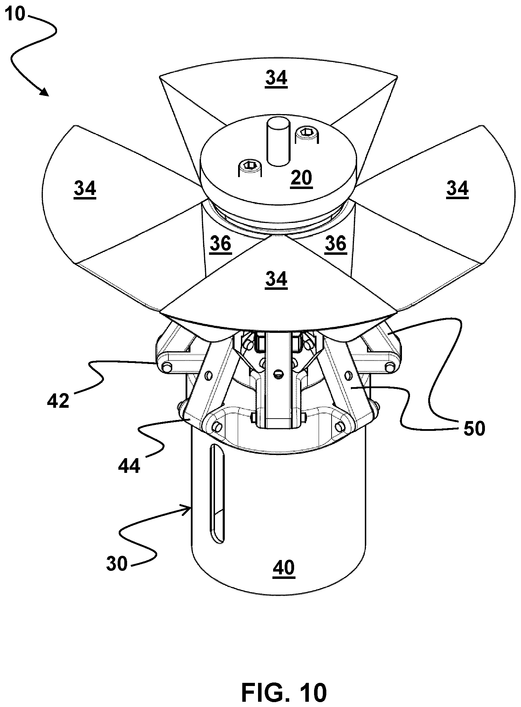

Fig. 7 zeigt nun eine geschnittene Ansicht eines weiteren bevorzugten Ausführungsbeispiels nach der Erfindung, wobei der Bewegungsablauf dieser bevorzugt ausgestalteten Vorrichtung 10 in den perspektivischen Ansichten der Fig. 8, 9 und 10 abgebildet ist.

Die Mechanik dieses zweiten Ausführungsbeispiels ist zu der Mechanik des vorgenannten ersten Ausführungsbeispiels identisch aufgebaut. Unterschiedlich hingegen ist die Formgebung der ersten Wandsegmente 34 und der zweiten Wandsegmente 36. Zwar sind auch bei diesem Beispiel die Mantelinnenflächen der Wandsegmente 34, 36 analog zum ersten Beispiel unterschiedlich ausgebildet. Deutlich anders ist hingegen die der Mantelinnenfläche abgewandte oder seitlich zu dieser angeordnete Form der Wandsegmente 34, 36, insbesondere der Wandsegmente 34 mit kleinerer Mantelinnenfläche. Diese sind nämlich so ausgebildet, dass die sich gegenüberliegenden Seitenwandungen der Wandsegmente 34 Taschen ausbilden, in die das Waffelblatt bei Anlegen der Wandsegmente 34 mit kleinerer Mantelinnenfläche an den Formkern 20 auskragen können.

Gleichzeitig bilden die Seitenwandungen der Wandsegmente 34 mit kleinerer Mantelinnenfläche jeweils eine Führung für die Wandsegmente 36 der anderen Gruppe von Wandsegmenten 36 mit größerer Mantelinnenfläche aus. Diese Ausbildung ermöglicht das vollständige Aufnehmen und Anpressen der über den Boden 32 hinausgehenden Abschnitte des Waffelblatts an den Formkern 20, sodass eine glatte Becherwandung mit einem glatten Becherrand ausgebildet werden kann.

## Patentansprüche

1. Vorrichtung (10) zur Herstellung eines Waffelbechers, mit einem Formkern (20) und einer Matrize (30), wobei
- die Matrize (30) einen Boden (32) und eine Mehrzahl von gelenkig mit dem Boden (32) verbundenen Wandsegmenten (34, 36) aufweist, und
- Mittel zum Verschwenken der Wandsegmente (34, 36) von einer ersten Position, in der der Boden (32) eine Auflage zur Aufnahme eines sich über den Boden (32) hinaus erstreckenden Waffelblatts ausbildet, in eine zweite Position, in der die Wandsegmente (34, 36) unter Anlegen der sich über den Bereich des Bodens (32) hinaus erstreckenden Abschnitte des Waffelblatts an den Formkern (20) eine den Boden (32) umschließende, sich im Wesentlichen senkrecht vom Boden (32) erstreckende Wandung ausbilden, vorgesehen sind, und
- der Formkern (20) und der Boden (32) gegen die Mittel verschieblich gelagert sind, wobei die Mittel
- eine zwei übereinander angeordnete Ebenen (42, 44) aufweisende Halterung (40),
- eine erste Gruppe von Wandsegmenten (34), die mittels einer ersten Gruppe von Armen (50) mit der ersten Ebene (42) der Halterung (40) verbunden sind, und
- eine zweite Gruppe von Wandsegmenten (36), die mittels einer zweiten Gruppe von Armen (50) mit der zweiten Ebene (44) der Halterung verbunden sind, aufweisen,
wobei
- die Arme (50) jeweils mit ihrem einen Ende gelenkig mit der ersten Ebene (42) oder der zweiten Ebene (44) der Halterung (40) und mit ihrem anderen Ende gelenkig mit je einem Wandsegment (34, 36) der ersten Gruppe oder der zweiten Gruppe verbunden sind, und
die Wandsegmente (34) der ersten Gruppe von Wandsegmenten (34) und die Wandsegmente (36) der zweiten Gruppe von Wandsegmenten (36) am Umfang des Bodens (32) alternierend angeordnet sind.

2. Vorrichtung (10) nach Anspruch 1, **dadurch gekennzeichnet, dass** der Boden (32) an der Halterung (40) gelagert ist.

3. Vorrichtung (10) nach einem der vorhergehenden Ansprüche, **dadurch gekennzeichnet, dass** der Formkern (20) gegen den Boden (32) verschieblich gelagert und eine Verschiebung des Bodens (32) gegen die Mittel bewirkend eingerichtet ist.

4. Vorrichtung (10) nach einem der vorhergehenden Ansprüche, **dadurch gekennzeichnet, dass** der Boden (32) gegen die Kraft einer Feder (60) gelagert ist.

5. Vorrichtung (10) nach einem der vorherigen Ansprüche, **dadurch gekennzeichnet, dass** die Wandsegmente (34, 36) als eine eine erste Form ausbildende erste Gruppe von Wandsegmenten (34) und als eine eine zweite Form ausbildende zweite Gruppe von Wandsegmenten (36) ausgebildet sind.

6. Vorrichtung (10) nach Anspruch 5, **dadurch gekennzeichnet, dass** die dem Formkern (20) zugewandte Mantelinnenfläche der ersten Gruppe von Wandsegmenten (34) eine geringere Fläche aufweist als die dem Formkern (20) zugewandte Mantelinnenfläche der zweiten Gruppe von Wandsegmenten (36).

7. Vorrichtung (10) nach einem der Ansprüche 5 und 6, **dadurch gekennzeichnet, dass** die Wandsegmente (34) der ersten Gruppe von Wandsegmenten (34) und die Wandsegmente (36) der zweiten Gruppe von Wandsegmenten (36) am Umfang des Bodens (32) alternierend angeordnet sind.

8. Vorrichtung (10) nach Anspruch 7, **dadurch gekennzeichnet, dass** die Wandsegmente (34) der einen Gruppe von Wandsegmenten (34) jeweils eine Führung für die Wandsegmente (36) der anderen Gruppe von Wandsegmenten (36) aufweisen.

9. Vorrichtung (10) nach einem der vorhergehenden Ansprüche, **gekennzeichnet durch** eine den Boden (32) relativ zu den Mitteln führende Zwangsführung.

10. Vorrichtung (10) nach einem der vorhergehenden Ansprüche, **dadurch gekennzeichnet, dass** die Mantelinnenfläche wenigstens eines Wandsegments (34, 36) eine Prägung aufweist.

## Claims

1. Device (10) for producing a wafer cup, comprising a mold core (20) and a female mold (30), wherein
- the female mold (30) has a base (32) and a plurality of wall segments (34, 36) hingedly connected to the base (32), and
- means for pivoting the wall segments (34, 36) from a first position in which the base (32) forms a support for receiving a wafer sheet that extends beyond the base (32) into a second position in which the wall segments (34, 36) form a wall which encloses the base (32) and extends substantially perpendicularly from the base (32), with the portions of the wafer sheet that extend beyond the region of the base (32) being applied to the mold core (20), and
- the mold core (20) and the base (32) are mounted so as to be displaceable relative to the means,
wherein
the means have
- a holder (40) having two levels (42, 44) arranged one above the other,
- a first group of wall segments (34) which are connected to the first level (42) of the holder (40) by means of a first group of arms (50), and
- a second group of wall segments (36) which are connected to the second level (44) of the holder by means of a second group of arms (50),
wherein
- the arms (50) are each hingedly connected at one end to the first plane (42) or the second level (44) of the holder (40) and at the other end to one wall segment (34, 36) of the first group or the second group, and
the wall segments (34) of the first group of wall segments (34) and the wall segments (36) of the second group of wall segments (36) are arranged alternately on the circumference of the base (32).

2. Device (10) according to claim 1, **characterized in that** the base (32) is mounted on the holder (40).

3. Device (10) according to either of the preceding claims, **characterized in that** the mold core (20) is mounted so as to be displaceable relative to the base (32) and is designed to cause the base (32) to be displaced relative to the means.

4. Device (10) according to any of the preceding claims, **characterized in that** the base (32) is mounted against the force of a spring (60).

5. Device (10) according to any of the preceding claims, **characterized in that** the wall segments (34, 36) are designed as a first group of wall segments (34) forming a first shape and a second group of wall segments (36) forming a second shape.

6. Device (10) according to claim 5, **characterized in that** the inner lateral surface of the first group of wall segments (34) that faces the mold core (20) has a smaller area than the inner lateral surface of the second group of wall segments (36) that faces the mold core (20).

7. Device (10) according to one of claims 5 and 6, **characterized in that** the wall segments (34) of the first group of wall segments (34) and the wall segments (36) of the second group of wall segments (36) are arranged alternately on the circumference of the base (32).

8. Device (10) according to claim 7, **characterized in that** the wall segments (34) of one group of wall segments (34) each have a guide for the wall segments (36) of the other group of wall segments (36).

9. Device (10) according to any of the preceding claims, **characterized by** a positive guide guiding the base (32) relative to the means.

10. Device (10) according to any of the preceding claims, **characterized in that** the inner lateral surface of at least one wall segment (34, 36) has an embossing.

## Revendications

1. Dispositif (10) pour la fabrication d'un gobelet en gaufre, comportant un noyau de moule (20) et une matrice (30), dans lequel
- la matrice (30) présente un fond (32) et une pluralité de segments de paroi (34, 36) reliés de manière articulée au fond (32), et
- des moyens sont prévus pour faire pivoter les segments de paroi (34, 36) d'une première position, dans laquelle le fond (32) forme un appui pour la réception d'une feuille de gaufre s'étendant au-delà du fond (32), vers une seconde position, dans laquelle les segments de paroi (34, 36) forment une paroi entourant le fond (32) et s'étendant sensiblement perpendiculairement au fond (32) en plaçant les sections de la feuille de gaufre, lesquelles s'étendent au-delà de la zone du fond (32), contre le noyau de moule (20), et
- le noyau de moule (20) et le fond (32) sont montés coulissants contre les moyens,
dans lequel les moyens présentent
- un support (40) présentant deux plans (42, 44) superposés,
- un premier groupe de segments de paroi (34), lesquels sont reliés au premier plan (42) du support (40) au moyen d'un premier groupe de bras (50), et
- un second groupe de segments de paroi (36), lesquels sont reliés au second plan (44) du support au moyen d'un second groupe de bras (50),
dans lequel
- les bras (50) sont respectivement reliés de manière articulée au premier plan (42) ou au second plan (44) du support (40) avec leur première extrémité et de manière articulée à respectivement un segment de paroi (34, 36) du premier groupe ou du second groupe avec leur autre extrémité, et
les segments de paroi (34) du premier groupe de segments de paroi (34) et les segments de paroi (36) du second groupe de segments de paroi (36) sont disposés en alternance sur la circonférence du fond (32).

2. Dispositif (10) selon la revendication 1, **caractérisé en ce que** le fond (32) est monté sur le support (40).

3. Dispositif (10) selon l'une des revendications précédentes,
**caractérisé en ce que** le noyau de moule (20) est monté coulissant contre le fond (32) et est conçu de manière à provoquer un coulissement du fond (32) contre les moyens.

4. Dispositif (10) selon l'une des revendications précédentes,
**caractérisé en ce que** le fond (32) est monté contre la force d'un ressort (60).

5. Dispositif (10) selon l'une des revendications précédentes,
**caractérisé en ce que** les segments de paroi (34, 36) sont formés comme un premier groupe de segments de paroi (34) formant un premier moule et comme un second groupe de segments de paroi (36) formant un second moule.

6. Dispositif (10) selon la revendication 5, **caractérisé en ce que** la surface interne d'enveloppe du premier groupe de segments de paroi (34) tournée vers le noyau de moule (20) présente une surface inférieure à la surface interne d'enveloppe du second groupe de segments de paroi (36) tournée vers le noyau de moule (20).

7. Dispositif (10) selon l'une des revendications 5 et 6, **caractérisé en ce que** les segments de paroi (34) du premier groupe de segments de paroi (34) et les segments de paroi (36) du second groupe de segments de paroi (36) sont disposés en alternance sur la circonférence du fond (32).

8. Dispositif (10) selon la revendication 7, **caractérisé en ce que** les segments de paroi (34) d'un groupe de segments de paroi (34) présentent respectivement un guidage pour les segments de paroi (36) de l'autre groupe de segments de paroi (36).

9. Dispositif (10) selon l'une des revendications précédentes, **caractérisé par** un guidage forcé guidant le fond (32) par rapport aux moyens.

10. Dispositif (10) selon l'une des revendications précédentes,
**caractérisé en ce que** la surface interne d'enveloppe d'au moins un segment de paroi (34, 36) présente un estampage.
